# EUROPÄISCHE PATENTSCHRIFT

(11) **EP 1 640 686 B1**
(45) Veröffentlichungstag und Bekanntmachung des Hinweises auf die Patenterteilung: **13.02.2008**
(21) Anmeldenummer: 05015718.9
(22) Anmeldetag: 20.07.2005
(51) Int. Cl.: F42B 23/00, B62D 57/036, B62D 57/02

(54) **Vorrichtung zum Verbringen einer Nutzlast, insbesondere zur Neutralisierung von Minen oder dergleichen**
Mean to bring a load, particularly for neutralizing a mine or the like
Dispositif de transport de charge utile, en particulier pour neutraliser une mine ou équivalent

(30) Priorität: 24.09.2004 DE 102004046571
(43) Veröffentlichungstag der Anmeldung: 29.03.2006
(73) Patentinhaber: Rheinmetall Landsysteme GmbH, 24107 Kiel (DE)
(72) Erfinder: Grosch, Hermann, Dr., 29336 Nienhagen (DE); Broll, Lutz, Dr., 29525 Uelzen (DE)
(74) Vertreter: Dietrich, Barbara

(56) Entgegenhaltungen:
- DE-A1- 3 535 337
- US-A- 1 388 545
- US-A- 3 921 739
- US-A- 4 505 441
- US-A- 4 505 442
- US-B1- 6 237 875

## Beschreibung

Die Erfindung betrifft eine Vorrichtung, die als Wurf- oder Flugkörper ausgebildet ist und eine Nutzlast in ein Ziel verbringen soll, wobei die Nutzlast vorzugsweise zum Auslösen von offen oder verdeckt verlegten Minen, Sprengkörpern oder dergleichen dient.

Bekannt ist das Verbringen einer Nutzlast unter anderem mittel ferngelenkten bzw. ferngesteuerten Fahrzeugen die durch einen Bediener an die erforderliche Position geführt werden. Dort wird die Nutzlast, beispielsweise eine Sprengladung oder ein High Power Microwave-Generator etc. an der gewünschten Position abgesetzt und zur Wirkung gebracht.

Ein ferngelenktes Fahrzeug zum Minenräumen ist aus der DE 196 19 135 C2 bekannt. Ein weiteres ferngelenktes Minenräumsystem wird in der DE 102 15 200 A1 beschrieben. Dabei müssen die Fahrzeuge so ausgeführt sein, dass sie in der Geländestruktur des Einsatzraumes den Zielpunkt erreichen können.

Einen anderen Weg geht die DE 101 47 837 A1. Hier wird ein Wurfsystem sowie ein Gefechtskopf mit einer Richtvorrichtung zur Neutralisierung von Minen offenbart. Die Nutzlast befindet sich in einem Splittergefechtskopf, der durch das Wurfsystem in das Ziel verbracht wird. Der Gefechtskopf selbst ist unter anderem mit einer Flugbahnkorrektureinrichtung ausgerüste, damit die Nutzlast präzise über der Minenposition zur Wirkung kommt und damit eine hohe Splitterdichte erzielt werden kann.

Aus der US 4,505,441 ist ein System zum Zerstören von Panzern bekannt, wobei eine Art Fahrzeug mit aerodynamischer Struktur eine Sprengladung oder dergleichen in die Nähe des Panzers geflogen wird und dem Panzer folgen kann. Das Fahrzeug wird dazu von einer Vorrichtung gestartet, wobei die Flugkurve durch unterschiedliche Anstellwinkel variiert werden kann.

Aufbauend auf diesen Grundgedanken, die Nutzlast mit Hilfe einer verschießbaren oder werfbaren Vorrichtung, nämlich einem Projektil oder dergleichen, ins Ziel zu verbringen, stellt sich die Erfindung die Aufgabe, die am / auf einem Absetzpunkt befindliche Vorrichtung mit Nutzlast auch ferngesteuert aktivieren und oder kontrolliert zum Ziel bewegen zu können.

Gelöst wird die Aufgabe durch die Merkmale des Patentanspruchs 1.

Der Erfindung liegt die Idee zugrunde, die in einer Vorrichtung eingebundene Nutzlast möglichst nahe an einen Absetzpunkt bzw. Auftreffpunkt zu verbringen, dort ein Bewegungssystem der Vorrichtung zu aktivieren, um so die Nutzlast direkt auf das Ziel bzw. den Zielpunkt zu führen. Das Verbringen erfolgt durch einen Werfer oder per Hand. Hat die Nutzlast den Zielpunkt erreicht, wird sie aktiviert. Dies kann automatisch oder ferngesteuert erfolgen. Der Zielpunkt ist dabei beispielsweise durch Zielkoordinaten beschrieben, die vor dem Abschuss in die Vorrichtung einprogrammiert werden.

Die Vorrichtung selbst kann während der Flugphase gelenkt oder ungelenkt sein. Bevorzugt wird eine ungelenkte Ausführung. Das vorzugsweise am Körper der Vorrichtung installierte oder durch den Körper der Vorrichtung gebildete Bewegungssystem ist dabei variabel gestaltbar und sollte nur einen geringen Raumbedarf haben.

Um Beschädigungen des Körpers bzw. der Vorrichtung und der Nutzlast beim Auftreffen zu vermeiden und ein Eindringen in den Untergrund zu verhindern, ist es in einer weiteren Ausführungsform vorgesehen, beispielsweise bei ca. 5 m über dem Boden ein Bremssystem, vorzugsweise einen Airbag, im / am Körper / Projektil zu aktivieren. Die Vorrichtung bestimmt dann nach abbremsen und vorzugsweise auf dem Boden liegend, automatisch seine Position und seine örtliche Orientierung. Die US 6,237,875 beschreibt einen Airbag zur Abbremsung des Landestoßes fliegender Nutzlasten. Dieser setzt sich aus einem Zentralairbag und zumindest einen diesen umringenden Torusring. Auf dem Zentralairbag ist die Nutzlast, beispielsweise eine Kapsel, anbringbar.

Weitere vorteilhafte Ausgestaltungen sind in weiteren Unteransprüchen enthalten.

Nutzlasten können dabei z.B. auch als Vorrichtungen zur Detektion und / oder Zerstörung/Neutralisierung von Minen definiert sein, die möglicherweise eine längere Verweildauer an oder auf der Minenposition (Zielpunkt) erfordern. Die Vorrichtung kann ein Projektil, ein Geschoss etc. sein und weist dazu einen Wurf- oder Flugkörper auf.

Verbracht wird die Vorrichtung beispielsweise durch ein Werfersystem, wie aus der DE 101 47 837 A1 bekannt, bei dem die Flugbahn der Vorrichtung möglichst steil ist, um Nutzlasten auch auf Zielpositionen hinter Hindernissen verbringen zu können. Bei kurzen Distanzwegen ist auch ein manuelles Verbringen durch Wurf möglich bzw. vorgesehen.

Die Vorteile der Lösung liegen unter anderem darin, dass eine Nutzlast mit einem bevorzugt ballistischen Körper (z.B. Projektil) so auf einem Zielpunkt abgeliefert wird, dass der Körper punktgenau und dort unbeschädigt sowie in einer vorwählbaren Orientierung zu liegen kommt. Auch Distanzen von 20 - 500 m sind dabei kein Problem. Ein flugbahnkorrigierendes Lenksystem ist nicht mehr erforderlich und kann entfallen. Der einfache Bewegungsmechanismus bzw. das einfache Bewegungssystem positioniert den ballistischen Körper genau auf dem Zielpunkt, um dort die Wirk- und Sensorsysteme einsetzen, d.h. die Nutzlast wirken lassen zu können. Es sind auch Sensor- und Wirkmechanismen als Nutzlast des Körpers einsetzbar, deren Funktionsweise eine stationäre Position und eine längere Verweilzeit voraussetzen.

Der jeweils im/ am Körper der Vorrichtung eingebundene Bewegungsmechanismus hat ein hervorragendes Verhalten bei Hindernissen, insbesondere bei Bewuchs. Insbesondere das Schraubenprinzip zur Vorwärtsbewegung ermöglicht die Durchdringung auch von dichter Vegetation. Ein weiterer Vorteil ist, dass die Auslösung von Wirkmechanismen zeitverzögert und / oder ferngesteuert erfolgen kann. Die Position des Projektils zum Ziel ist von einer fliegenden Plattform kontrollierbar. Positionsabweichungen können an die Vorrichtung übertragen werden, die dann eine Korrektur der Position vornimmt.

Anhand von zwei ausgewählten Ausführungsbeispielen mit Zeichnungen soll die Erfindung näher beschrieben werden.
Es zeigen:
- Fig. 1: eine Prinzipdarstellung des Verbringens einer Nutzlast mittels eines ballistischen Flugkörpers in ein Ziel,
- Fig. 2: den Flugkörper aus Fig. 1 mit Teilen einer ersten Ausführung,
- Fig. 3: eine Darstellung des aktivierten Bremssystems aus Fig. 1,
- Fig. 4: Details des Bewegungssystems der ersten Ausführung,
- Fig. 5: den Flugkörper aus Fig. 1 in einer weiteren Ausführung mit einem weiteren Bewegungssystem,
- Fig. 6 a) bis g): die Bewegungsabläufe des Bewegungssystems aus Fig. 5 zur Fortbewegung zum Ziel,
- Fig. 7: eine Darstellung der Richtungsänderung des Flugkörpers aus Fig. 5 der Bewegung auf dem Boden.

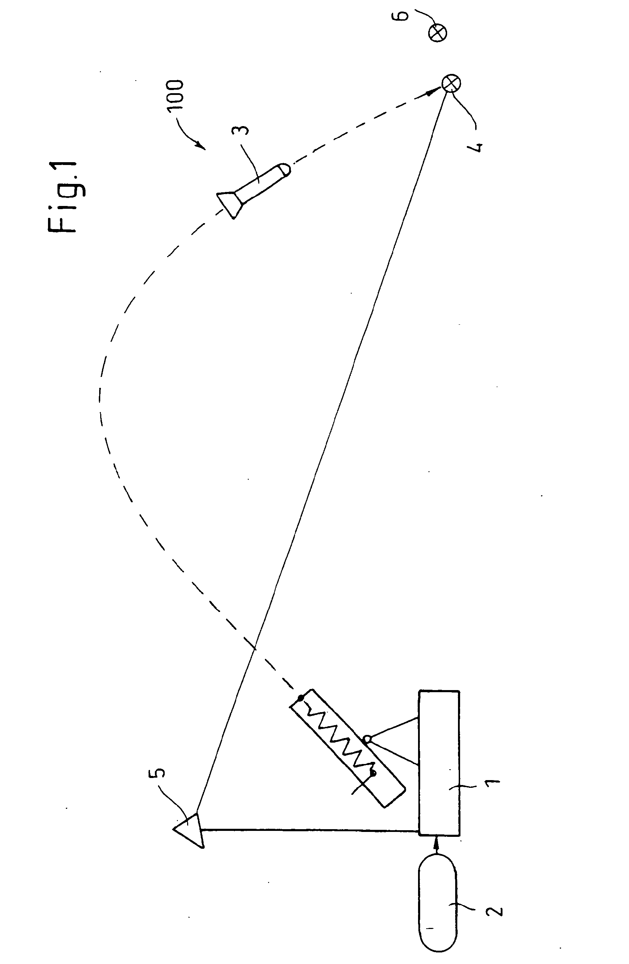

In Fig. 1 ist in einer Prinzipdarstellung das Verbringen einer Vorrichtung 100, eines vorzugsweise ballistischen Flugkörpers 3 (Gehäuses), hier ein Projektil, mit Hilfe einer Werfereinrichtung 1 (Werfer) dargestellt. Mit 2 ist eine Programmiereinrichtung gekennzeichnet, mit 5 eine Einrichtung insbesondere zur Bestimmung der Position des Aufsetz- bzw. Auftreffpunktes 4 (Auflageposition) des Projektils 3 auf dem Boden.

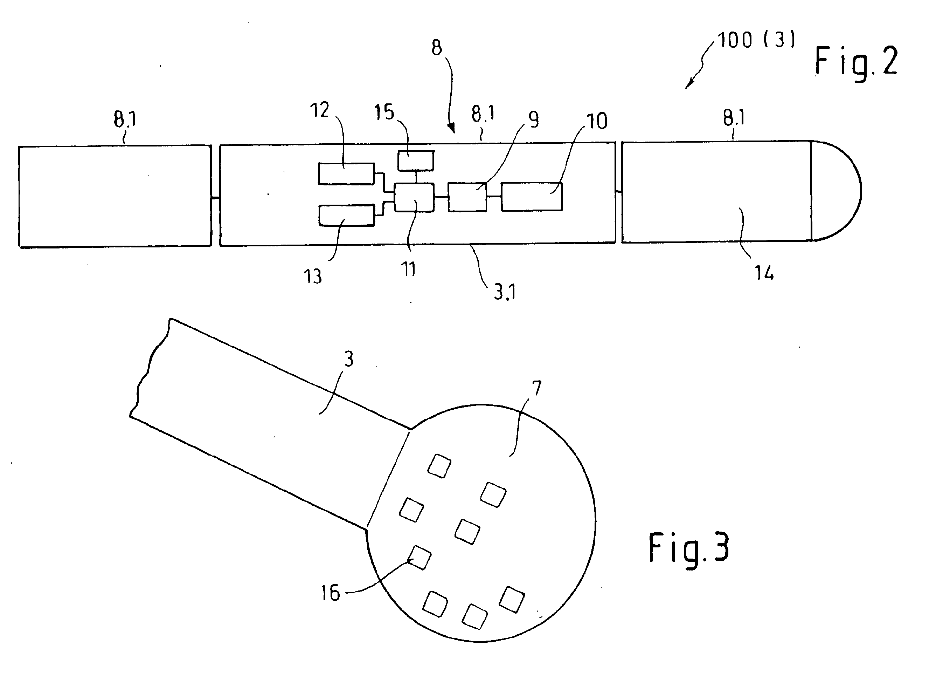

Die Vorrichtung 100 bzw. das Projektil 3 (Fig. 2) besitzt (für alle Ausführungen geltend) vorzugsweise im vorderen Bereich, am Kopf, ein Bremssystem 7, hier einen Airbag. Zusätzlich oder alternativ kann ein Bremssystem, beispielsweise ein fallschirmartiger Airbag am hinteren Teil vorgesehen werden (nicht dargestellt). Das Projektil 3 beinhaltet des Weiteren ein Bewegungssystem 8, einen Rechner für die Ablauf- und Navigationssteuerung 9, ein Programmiermodul 10, ein Navigationssystem 11 sowie eine Einrichtung 12 zur Bestimmung der Richtung und eine Einrichtung 13 zur Bestimmung der zurückgelegten Wegstrecke. Bevorzugt wird das Navigationssystem 11 durch einen GPS- Empfänger 15 unterstützt. Die vorgenannten Einrichtungen 9 bis 12 sowie 15 sind funktional miteinander verschaltet. Eine zu verbringende Nutzlast 14 befindet sich im vorderen Bereich des Projektils 3.

Sind die Koordinaten des Zielpunktes 6 nur als geodätische Koordinaten bekannt, ist es erforderlich, dass die geodätischen Koordinaten des Werfers 1 sowie eine Raumwinkelreferenz für die Abschussrichtung des Werfers 1 bekannt sind, um Azimut, Elevation sowie die Startgeschwindigkeit des Projektils 3 berechnen zu können.

Ist der Zielpunkt 6 von der Position des Werfers 1 aus sichtbar, können Richtung und Entfernung zum Zielpunkt 6 mittels der Einrichtung 5, z.B. eines optischen Richtungs- und Entfernungsmessers, bestimmt werden. Näheres zu der Bestimmung kann der DE 101 47 837 A1 entnommen werden, auf die hiermit Bezug genommen wird. Mit diesem Vektor können Azimut und Elevation des Werfers 1 sowie die Startgeschwindigkeit des Projektils 3 berechnet werden.

Dem Projektil 3 werden vor dem Abschuß die Zielkoordinaten sowie die Flugbahndaten einprogrammiert. Für diese Funktion zeichnen die Programmiereinrichtung 2 am Werfer 1 und ein Programmiermodul 10 im Projektil 3 verantwortlich. Danach verbringt der Werfer 1 das Projektil 3 ballistisch möglichst nahe an das Ziel 6. Auf der Flugbahn des Projektils 3 wird vorzugsweise bei ca. 5 m vor Auftreffen auf den Untergrund automatisch der Airbag 7 im Kopf des Projektils 3 aktiviert, um ein Eindringen des Projektils 3 in den Untergrund zu verhindern. Durch die kurze Distanz zum Boden wird erreicht, dass Abweichungen des Projektils 3 von der Sollflugbahn durch vom Airbag 7 verursachte Störungen der Aerodynamik minimiert werden.

Nach dem Aufsetzen im Auftreffpunkt 4 besitzt das Projektil 3 einen Abstand zum Ziel 6, der sich durch außenballistische Einflüsse bestimmt. Der Vorgang des Aufsetzens auf den Boden führt zu weiteren Abweichungen von der einprogrammierten Position. Auch die Orientierung der Projektilachse zum Ziel 6 ist zufällig. Ist das Projektil 3 zur Ruhe gekommen, wird der Airbag 7 abgetrennt. Diese Aufgabe können kleine Sprengkörper am Airbag 7 (nicht näher dargestellt) übernehmen.

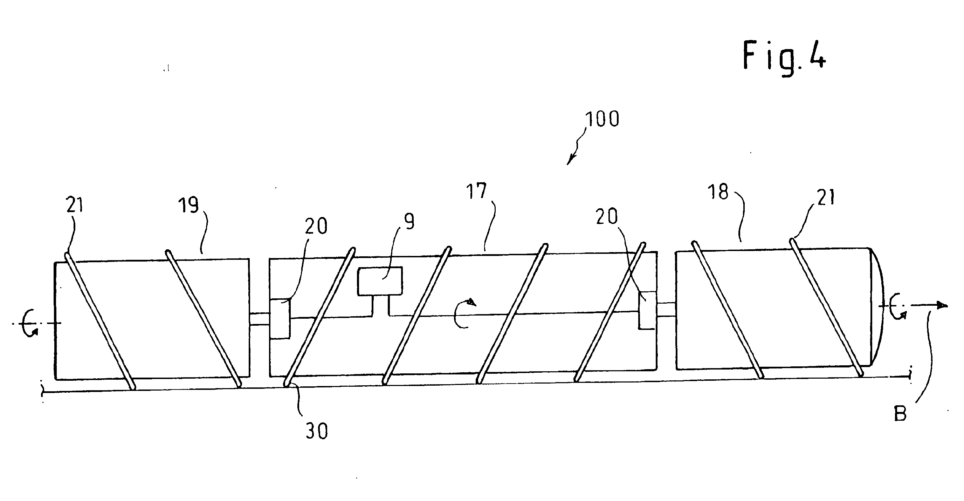

Mittels der im Projektil 3 integrierten Navigationseinrichtung 11, bevorzugt nur mit dem GPS-Empfänger 15 realisiert, wird der Aufsetzpunkt 4 des Projektils 3 bestimmt. Das Projektil 3 startet nun sein Bewegungssystem 8, durch das es zum Ziel 6 geführt wird. Dabei bewegt sich das Projektil 3 zuerst in eine Richtung, die durch seine zufällige Ruheorientierung vorgegeben ist. Die GPS-gestützte Navigationseinrichtung 11 bestimmt Einzelpositionswerte auf der Wegstrecke. Aus diesen Punkten wird die Bewegungsrichtung des Projektils 3 im Erdkoordinatensystem ermittelt. Dieser Richtungswert dient dann zur Berechnung der Bewegungsrichtung B (Fig.4) des Projektils 3 zum Ziel 6. Mittels der GPS - Positionsdaten bewegt sich das Projektil 3 bis zur Position des Zieles 6. Die Auswertung der GPS-Daten und die Ansteuerung des Bewegungssystems 8 werden durch den Rechner 9 im Projektil 3 durchgeführt.

Zusätzlich zum GPS-Empfänger 15 ist eine Einrichtung 12 zur Bestimmung der Richtung im Erdkoordinatensystem, vorzugsweise als Magnetsensor ausgeführt, im Projektil vorgesehen, der die Orientierung des Projektils zu magnetisch Nord und damit zu einem Erdkoordinatensystem bestimmt. Die Anfangsbewegung des Projektils.3 kann dann direkt in Richtung des Zielpunktes erfolgen. Dieser Richtungswert muß dann nicht erst aus der willkürlichen Anfangsbewegungsrichtung berechnet werden.

Alternativ zur beschriebenen Navigation des Projektils 3 zum Ziel 6 kann die Position des Aufsetzpunktes 4 des Projektils durch die Einrichtung 5, die auf einer vermessenen Position im Gelände steht, vermessen werden. Die Messung kann in einer technischen Ausführung bevorzugt z.B. von der Werferposition aus, mit einem optischen Richtungs- und Entfernungsmessers kurz vor Aufsetzen des Projektils 3 auf den Boden erfolgen. Dabei bietet sich an, die Aktivierung des Airbags 7, der hierfür mit optischen Reflektoren 16 (Fig.3) versehen wird, für den Messvorgang zu nutzen. Der Aufsetzpunkt 4 selbst wird dann durch Extrapolation der Flugbahn berechnet. Diese berechnete Position wird dann in das Projektil 3 übertragen. Diese Übertragung kann per Funk erfolgen oder auch über die optronische Messstrecke selbst, wenn die Position des Projektils 3 aktiv optisch, z.B. über Laser, vermessen wird. Das Navigationssystem 11 enthält dann bevorzugt nur einen Richtungssensor und einen Sensor zur Messung der zurückgelegten Wegstrecke. Auf ein GPS 15 kann dann verzichtet werden.

Für die Ausführung des Bewegungssystems 8 werden nunmehr zwei unterschiedliche Konzepte beschrieben:

In einer ersten Ausführung des Bewegungssystems 8.1 bzw. -mechanismus bewirkt dieses eine Bewegung in Ausrichtung der Projektilachse. Kontrollierte Änderungen der Bewegungsrichtung B sind möglich.

Hierzu ist das Projektil 3.1 in vorzugsweise drei zylinderförmige, koaxial angeordnete und miteinander verbundene Segmente 17, 18, 19 (Fig.4) unterteilt. Vorzugsweise im mittleren Segment 17 befinden sich je ein Antriebsmotor 20 für das vordere Segment 18 und das hintere Segment 19 (in Bewegungsrichtung betrachtet). Die Drehrichtung der Antriebe ist so, dass sich das vordere 18 und das hintere Segment 19 gleichsinnig drehen. Auf dem vorderen 18 und hinteren Segment 19 ist schraubenförmig ein Steg 21 aufgebracht. Die schraubenförmige Orientierung auf dem vorderen 18 und hinteren 19 Segment ist gleichsinnig. Die Steigung der Stege 21 ist gleich. Auf dem mittleren Segment 17 ist in umgekehrter Orientierung mit gleicher Steigung ein Steg 30 in ungefähr doppelter Länge zum Steg 21 des vorderen 18 bzw. hinteren Segments 19 aufgebracht. Dabei wird vorausgesetzt, dass das Gewicht des mittleren Segmentes 17 in etwa der Summe der Gewichte des vorderen 18 und des hinteren Segmentes 19 entspricht.

Drehen nun die Motore 20 das vordere 18 und hintere Segment 19 gleichsinnig, führt das Gegenmoment zu einer Rotation des mittleren Segmentes 17 mit umgekehrtem Drehsinn. Der schraubenförmige Steg 21, 30 auf den Segmenten 17-19 führt durch die Reibung auf dem Untergrund zu einer Bewegung des Projektils 3 in seiner Längsachse, wenn die Reibung des vorderen 18 und hinteren Segmentes 19 auf dem Untergrund gleich ist und in der Summe der Reibung des mittleren Segmentes 17 entspricht. Durch Wahl der Drehrichtung kann sich das Projektil 3.1 vorwärts oder rückwärts bewegen.

Um die Richtung des Projektils 3.1 zu seiner Längsachse verändern zu können, muß lediglich das Antriebsmoment des vorderen oder hinteren Antriebsmotors 20 verändert werden. Das führt zu einem Drehmoment, so dass sich die Orientierung der Projektilachse auf dem Untergrund verändert. Durch geeignete Ansteuerung der Motoren 20 (gegenläufige Drehrichtung) ist auch eine Kreisbewegung um den Mittelpunkt des Projektils 3.1 möglich.

Damit ist eine kontrollierte Steuerung der Bewegung des Projektils 3.1 auf dem Untergrund möglich. Zusätzlich können auf diese Weise auch Unterschiede in der Reibung zwischen Untergrund und der aufliegenden Projektilfläche, die zu Kursabweichungen führen, kompensiert werden.

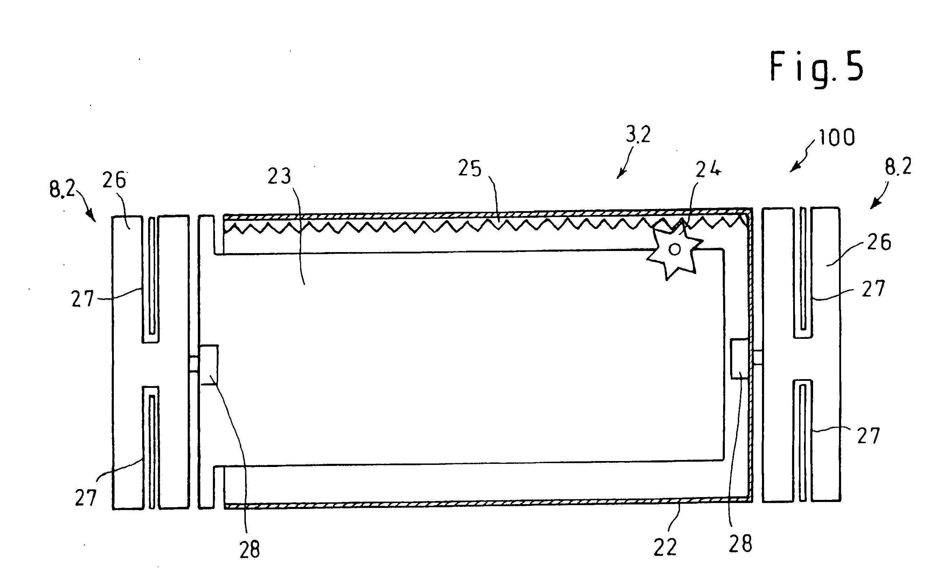

In einer anderen Ausführung (Fig.5) besteht das Projektil 3.2 aus zwei ineinander liegenden zylinderförmigen und konzentrisch angeordneten Baugruppen, also einer außen liegenden Baugruppe 22 und einer innen liegenden Baugruppe 23. Die beiden Baugruppen 22, 23 können wie ein Teleskop auseinander- bzw. zusammengeschoben werden. Diese Funktion kann z.B. durch wenigstens einen Motor mit Zahnrad 24 in Kombination mit wenigstens einer Zahnstange 25 realisiert werden.

Die beiden röhrenförmigen Baugruppen 22, 23 sind jeweils am äußeren Ende mit einem Kopfstück 26 versehen, aus dem motorisch radial Stifte 27 ausgefahren und wieder eingefahren werden können. Im Kopfstück 26 sind bevorzugt sechs Stifte um 60 Grad zueinander versetzt angeordnet. Das Kopfstück 26 kann über einen Motor 28 kontrolliert gegenüber den Baugruppen 22 bzw. 23 verdreht werden. Die vorgenannten Bauteile definieren das Bewegungssystem 8.2 für dieses Projektil 3.2 .

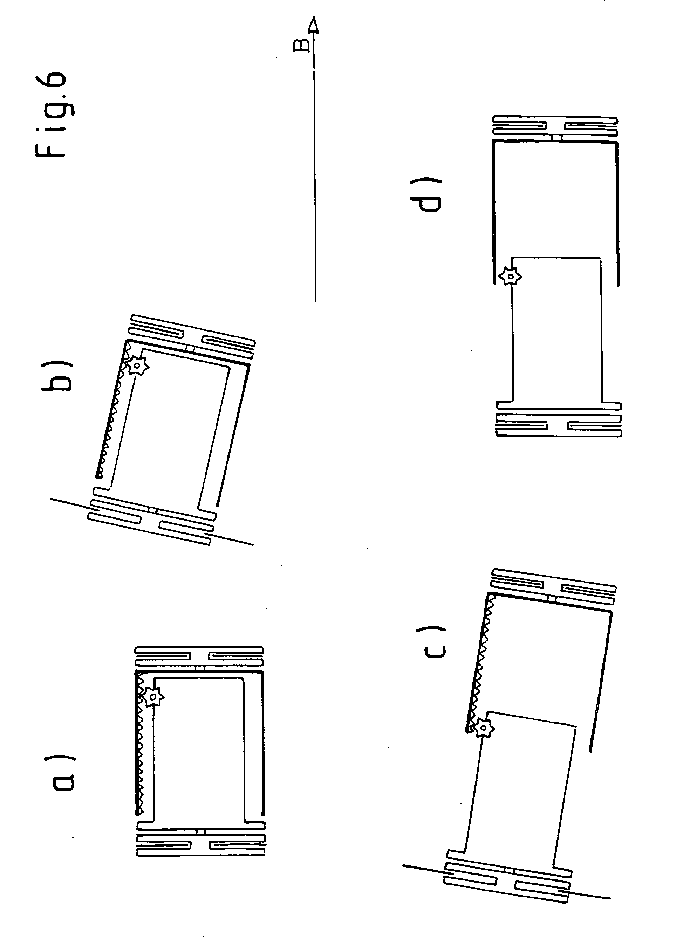

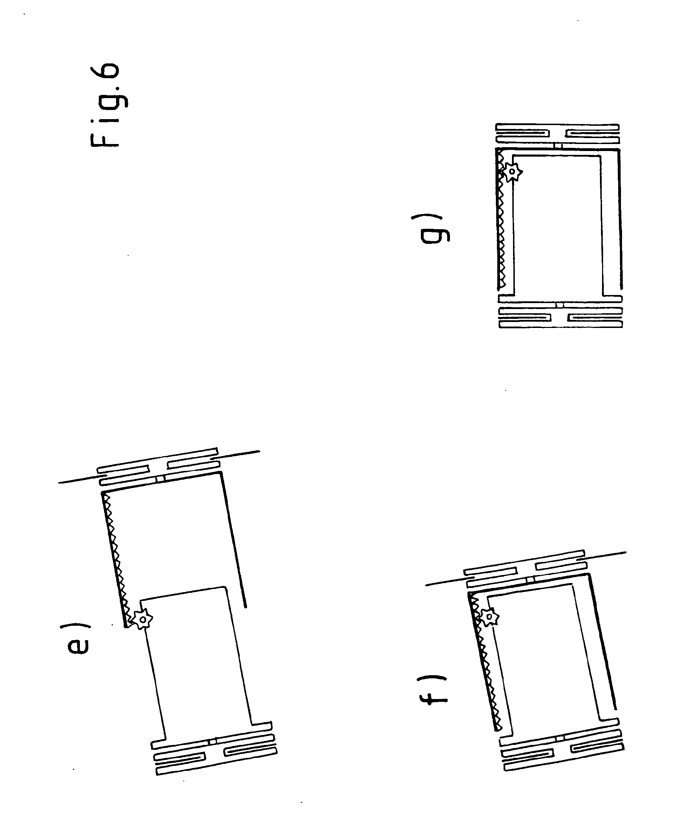

Der Bewegungsablauf dieser Ausführung soll anhand der Fig. 6 a bis 6g näher betrachtet werden.

In Fig. 6a sind die beiden Baugruppen 22, 23 zusammengeschoben. Die beabsichtigte Bewegung erfolgt in der Orientierung der Projektilachse nach vorne (B). Das hintere Kopfstück 26 verschließt die äußere Baugruppe 22. Zuerst werden die Stifte 27 aus dem Kopfstück 26 der inneren Baugruppe 23 ausgefahren (Fig. 6b). Die Stifte 27 sind an ihren Enden so verbreitert, dass sie möglichst gut auf dem Untergrund haften. Dann wird die innere Baugruppe 23 motorisch 24 ausgeschoben, wobei die innere Baugruppe 23 durch die Haftung der Stifte 27 auf dem Untergrund in ihrer Position verharrt und die äußere Baugruppe 22 nach vorne geschoben wird (Fig. 6c). Nach Ausschieben der inneren Baugruppe 23 werden die Stifte 27 des hinteren Kopfstücks 26 wieder eingefahren (Fig. 6d) und die Stifte 27 aus dem vorderen Kopfstück 26 ausgefahren (Fig. 6e). Dann werden die beiden Baugruppen 22, 23 motorisch 24 wieder zusammengefahren (Fig. 6f) . Durch die Haftung der Stifte 27 des Kopfstücks 26 der äußeren Baugruppe 22 auf dem Untergrund wird die innere Baugruppe 22 in die verharrende äußere Baugruppe 23 gezogen. Damit hat sich das Projektil 3 in Richtung seiner Achse um etwa die Länge einer Baugruppe 22 /23 nach vorne geschoben. Nach Einfahren der Stifte 27 ist dann die Ausgangskonfiguration für den nächsten Zyklus gegeben (Fig. 6g).

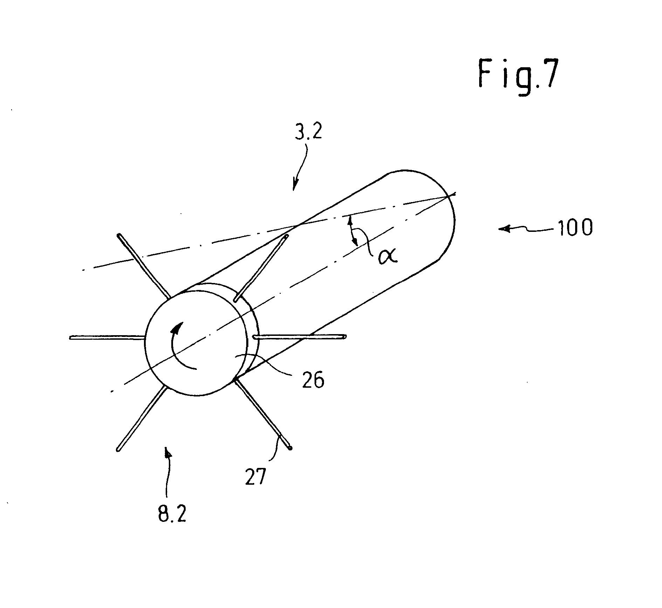

Um eine Richtungsänderung zu bewirken, wird das Kopfstück 26 einer Baugruppe 22, 23 dann gedreht, wenn die Stifte 27 ausgeschoben sind. Das Kopfstück 26 wird über den zugehörigen Kopfmotor 28 soweit gedreht, bis die gewünschte Änderung der Richtung um den Winkel α erreicht ist (Fig. 7). Werden beide Kopfstücke 26 über Motore 28 an der jeweiligen Baugruppen 22, 23 bewegt, kann das Projektil 3.1 bei gegenläufiger Bewegungsrichtung der Motore 28 um die Mittelachse herum jede gewünschte Orientierung einnehmen.

Die hier beschriebenen Bewegungssysteme 8.1 , 8.2 sind nur beispielgebend. Es versteht sich, dass diese nicht einschränkend zu sehen sind, sondern auch weitere im Rahmen der Erfindung liegende Bewegungssysteme umfasst sind, mit deren Hilfe ein Wurfkörper, Projektil etc. von einer Position zu einer anderen selbst kriechend verbracht werden kann.

## Patentansprüche

1. Vorrichtung (100), enthaltend
- eine Nutzlast (14), die insbesondere zum Auslösen von offen oder verdeckt verlegten Minen, Sprengkörpern oder dergleichen dient, aufweisend
o einen als Wurf -oder Flugkörper ausgebildeten Körper (3, 3.1, 3.2), in dem zumindest ein Rechner (9) für die Ablauf- und Navigationssteuerung, sowie damit elektrisch verbunden ein Programmiermodul (10) und ein Navigationssystem (11) enthalten sind,
o ein Bewegungssystem (8, 8.1, 8.2), welches am Körper (3, 3.1, 3.2) installiert ist oder durch den Körper (3, 3.1, 3.2) gebildet wird, wodurch
o der Körper (3, 3.1, 3.2) mit der Nutzlast (14) nach dem Aufsetzen auf einen Aufsetzpunkt (4) auf das Ziel (6) geführt wird, **dadurch gekennzeichnet, dass** das Bewegungssystem (8,8.1,8.2) den Körper (3,3.1,3.2) direkt auf das Ziel (6) selbst kriechend verbringt.

2. Vorrichtung nach Anspruch 1,
**dadurch gekennzeichnet, dass** eine Einrichtung (12) zur Bestimmung der Richtung und eine Einrichtung (13) zur Bestimmung der zurückgelegten Wegstrecke im Körper (3) eingebunden ist.

3. Vorrichtung nach Anspruch 1 oder 2,
**dadurch gekennzeichnet, dass** ein Bremssystem (7) am Körper (3) vorgesehen ist.

4. Vorrichtung nach Anspruch 3,
**dadurch gekennzeichnet, dass** das Bremssystem (7) ein Airbag ist, der abgetrennt wird, wenn der Körper (3, 3.1, 3.2) zur Ruhe gekommen ist.

5. Vorrichtung nach einem der Ansprüche 1 bis 4,
**dadurch gekennzeichnet, dass** der Körper (3.1) in zylinderförmige, koaxial angeordnete und miteinander verbundene Segmente (17, 18, 19) unterteilt ist.

6. Vorrichtung nach Anspruch 5,
**dadurch gekennzeichnet, dass** im mittleren Segment (17) sich je ein Antriebsmotor (20) für das vordere Segment (18) und das hintere Segment (19) befindet.

7. Vorrichtung nach Anspruch 5 oder 6,
**dadurch gekennzeichnet, dass** auf dem vorderen Segment (18) und dem hinteren Segment (19) schraubenförmig ein Steg (21) aufgebracht ist, dessen schraubenförmige Orientierung auf dem vorderen Segment (18) und dem hinteren Segment (19) gleichsinnig ist.

8. Vorrichtung nach Anspruch 7,
**dadurch gekennzeichnet, dass** die Steigung der Stege (21) gleich ist.

9. Vorrichtung nach einem der Ansprüche 7 oder 8,
**dadurch gekennzeichnet, dass** auf dem mittleren Segment (17) ein Steg (30) in umgekehrter Orientierung mit gleicher Steigung und in ungefähr doppelter Länge zum Steg (21) des vorderen bzw. hinteren Segments (18,19) aufgebracht ist.

10. Vorrichtung nach einem der Ansprüche 1 bis 4,
**dadurch gekennzeichnet, dass** der Körper (3.2) aus zwei ineinander liegenden zylinderförmigen und konzentrisch angeordneten Baugruppen (22, 23), einer außen liegenden Baugruppe (22) und einer innen liegenden Baugruppe (23) gebildet wird, die wie ein Teleskop auseinander bzw. zusammen geschoben werden können, wobei die Baugruppen (22, 23) jeweils am äußeren Ende jeweils mit einem Kopfstück (26) versehen sind, aus denen radiale Stifte (27) ausgefahren und wieder eingefahren werden können.

11. Vorrichtung nach Anspruch 10,
**dadurch gekennzeichnet, dass** im Kopfstück (26) jeweils sechs Stifte (27) und diese zueinander um 60 Grad versetzt angeordnet sind.

12. Vorrichtung nach einem der Ansprüche 10 oder 11,
**dadurch gekennzeichnet, dass** das Kopfstück (26) über einen Motor (28) kontrolliert gegenüber den Baugruppen (22, 23) verdreht werden kann.

13. Vorrichtung nach Anspruch 4,
**dadurch gekennzeichnet, dass** das Abtrennen mittels kleiner Sprengkörper am Airbag (7) erfolgt.

## Claims

1. Apparatus (100), containing
- a payload (14) which is used in particular to initiate mines, explosive bodies or the like laid open or concealed, having
o a body (3, 3.1, 3.2) which is in the form of a projectile or airborne vehicle and contains at least one computer (9) for procedure and navigation control, as well as electrically connected thereto, a programming module (10) and a navigation system (11),
o a motion system (8, 8.1, 8.2) which is installed on the body (3, 3.1, 3.2) or is formed by the body (3, 3.1, 3.2), as a result of which
o the body (3, 3.1, 3.2) is guided with the payload (14) to the target (6) after having been placed at a placement point (4),
**characterized in that** the motion system (8, 8.1, 8.2) moves the body (3, 3.1, 3.2) directly to the target (6) itself by creeping.

2. Apparatus according to Claim 1,
**characterized in that** a device (12) for determining the direction and a device (13) for determining the distance travelled are included in the body (3).

3. Apparatus according to Claim 1 or 2,
**characterized in that** a braking system (7) is provided on the body (3).

4. Apparatus according to Claim 3,
**characterized in that** the braking system (7) is an airbag, which is disconnected when the body (3, 3.1, 3.2) comes to rest.

5. Apparatus according to one of Claims 1 to 4,
**characterized in that** the body (3.1) is subdivided into cylindrical segments (17, 18, 19) which are arranged coaxially and are connected to one another.

6. Apparatus according to Claim 5,
**characterized in that** a drive motor (20) for the front segment (18) and a drive motor for the rear segment (19) are located in the central segment (17).

7. Apparatus according to Claim 5 or 6,
**characterized in that** a web (21) is fitted in a helical shape on the front segment (18) and the rear segment (19), with its helical orientation being in the same sense on the front segment (18) and the rear segment (19).

8. Apparatus according to Claim 7,
**characterized in that** the pitch of the webs (21) is the same.

9. Apparatus according to one of Claims 7 or 8,
**characterized in that** a web (30) is fitted on the central segment (17), in the opposite orientation but with the same pitch and of approximately twice the length of the web (21) on the front and rear segments (18, 19).

10. Apparatus according to one of Claims 1 to 4,
**characterized in that** the body (3.2) is formed from two cylindrical assemblies (22, 23), which are located one inside the other and are arranged concentrically, an outer assembly (22) and an inner assembly (23), which can be pushed apart from one another or together like a telescope, with the assemblies (22, 23) each being provided at the outer end with a respective head piece (26) from which radial pins (27) can be extended and retracted again.

11. Apparatus according to Claim 10,
**characterized in that** six pins (27) are in each case arranged in the head piece (26) and are offset through 60 degrees with respect to one another.

12. Apparatus according to one of Claims 10 or 11,
**characterized in that** the head piece (26) can be rotated with respect to the assemblies (22, 23), via a motor (28), in a controlled manner.

13. Apparatus according to Claim 4, **characterized in that** the disconnection process is carried out by means of a small explosive body adjacent to the airbag.

## Revendications

1. Dispositif (100), contenant
- une charge utile (14), qui sert notamment à déclencher des mines déposées visibles ou cachées, des explosifs ou similaires, présentant :
* un corps (3, 3.1, 3.2) réalisé sous forme de projectile ou de missile dans lequel sont contenus au moins un ordinateur (9) pour la commande de la sortie et de la navigation, ainsi qu'un module de programmation (10) et un système de navigation (11) connectés électriquement à celui-ci,
* un système de déplacement (8, 8.1, 8.2) qui est installé sur le corps (3, 3.1, 3.2) ou qui est formé par le corps (3, 3.1, 3.2), de sorte que
* le corps (3, 3.1, 3.2) soit guidé sur la cible (6) avec la charge utile (14) après la mise en place sur un point de positionnement (4),
**caractérisé en ce que** le système de déplacement (8, 8.1, 8.2) déplace le corps (3, 3.1, 3.2) directement sur la cible (6) avec progression autonome.

2. Dispositif selon la revendication 1,
**caractérisé en ce qu'**un dispositif (12) pour déterminer l'orientation et un dispositif (13) pour déterminer la distance parcourue sont incorporés dans le corps (3).

3. Dispositif selon la revendication 1 ou 2,
**caractérisé en ce qu'**il est prévu un système de freinage (7) sur le corps (3).

4. Dispositif selon la revendication 3,
**caractérisé en ce que** le système de freinage (7) est un airbag qui est séparé lorsque le corps (3, 3.1, 3.2) s'immobilise.

5. Dispositif selon l'une quelconque des revendications 1 à 4,
**caractérisé en ce que** le corps (3.1) est divisé en segments (17, 18, 19) cylindriques, disposés coaxialement et connectés les uns aux autres.

6. Dispositif selon la revendication 5,
**caractérisé en ce qu'**à chaque fois un moteur d'entraînement (20) pour le segment avant (18) et le segment arrière (19) se trouve dans le segment central (17).

7. Dispositif selon la revendication 5 ou 6,
**caractérisé en ce que** l'on monte sur le segment avant (18) et le segment arrière (19) une nervure (21) de forme hélicoïdale dont l'orientation hélicoïdale est dans le même sens sur le segment avant (18) et sur le segment arrière (19).

8. Dispositif selon la revendication 7,
**caractérisé en ce que** le pas de la nervure (21) est uniforme.

9. Dispositif selon l'une quelconque des revendications 7 ou 8,
**caractérisé en ce que** l'on monte sur le segment central (17) une nervure (30) suivant une orientation inverse, avec le même pas et approximativement le double de la longueur de la nervure (21) sur le segment avant, respectivement arrière (18, 19).

10. Dispositif selon l'une quelconque des revendications 1 à 4,
**caractérisé en ce que** le corps (3.2) est formé de deux modules (22, 23) de forme cylindrique, situés concentriquement l'un dans l'autre, un module (22) situé à l'extérieur et un module (23) situé à l'intérieur, lesquels peuvent être enfoncés l'un dans l'autre et sortis comme un télescope, les modules (22, 23) étant pourvus à chaque fois à l'extrémité extérieure d'une partie de tête (26), de laquelle des broches radiales (27) peuvent être sorties et à nouveau rentrées.

11. Dispositif selon la revendication 10,
**caractérisé en ce que** six broches respectives (27) sont disposées dans la partie de tête (26) et sont décalées de 60 degrés les unes des autres.

12. Dispositif selon l'une quelconque des revendications 10 ou 11,
**caractérisé en ce que** la partie de tête (26) peut être tournée par rapport aux modules (22, 23) de manière contrôlée par un moteur (28).

13. Dispositif selon la revendication 4,
**caractérisé en ce que** la séparation s'effectue au moyen de petits explosifs sur l'airbag (7).
